# FASCICULE DE BREVET EUROPEEN

(11) **EP 0 985 352 B1**
(45) Date de publication et mention de la délivrance du brevet: **12.11.2003**
(21) Numéro de dépôt: 98203065.2
(22) Date de dépôt: 11.09.1998
(51) Int. Cl.: A23L 1/211, A23L 1/105, A23L 1/164, A23L 1/10

(54) **Aliment déshydraté à base de céréales et de légumineuses hydrolysées, et son procédé de préparation**
Getrocknetes Nahrungsmittel auf Basis von Getreide und hydrolysierten Leguminosen, und Verfahren seiner Herstellung
Dehydrated food product based on cereals and hydrolysed leguminous, and process for making it

(43) Date de publication de la demande: 15.03.2000
(73) Titulaire: SOCIETE DES PRODUITS NESTLE S.A., 1800 Vevey (CH)
(72) Inventeur: Diop, Serigne Gueye, 09 BP 2538, Abidjan (CI); Mogis, Didier, Abidjan 01 (CI)
(74) Mandataire: Vuille, Roman

(56) Documents cités:
- CH-A- 681 276
- GB-A- 465 884
- US-A- 3 950 543
- US-A- 3 956 506
- US-A- 4 233 322
- US-A- 5 631 032
- DATABASE FSTA INTERNATIONAL FOOD INFORMATION SERVICE (IFIS), FRANFURT/MAIN, DE AN 96-1-12-g0033, 1996 F.CHOME, R.D. PHILLIPS: "Physicochemical Properties of Maize/Cowpea-Based Weaning Foods Produced by Extrusion Cooking with Alpha-Amylase" XP002092947 & , ABSTRACT OF PRESENTATION - 1996 ANNUAL MEETING OF THE INSTITUTE OF FOOD TECHNOLOGISTS , USA

## Description

La présente invention a pour objet un produit nutritionnel riche en protéines et plus particulièrement une base floconnée constituée principalement d'un mélange de farine de légumineuses hydrolysées et de céréales. La présente invention concerne également le procédé de préparation d'une telle base et son utilisation pour préparer des compositions destinées à des cas de nutrition spécifique telle que celle des enfants ou de personnes âgées.

### Etat de la technique

Les mélanges à base de céréales hydrolysées comme source de carbohydrates sont communément utilisés pour la préparation d'aliments infantiles. Ces produits contiennent des céréales comme principale source de carbohydrates et des protéines ajoutées sous forme de lait écrémé en poudre par exemple. Un inconvénient de ces produits est leur coût qui reste trop élevé pour certains pays. On peut alors utiliser du soja comme source de protéines mais l'utilisation de ce dernier n'est pas sans inconvénient. En effet, d'un point de vue organoleptique, le soja a un goût particulier (goût de "haricot" ou "beany flavour") et une sensation en bouche que l'on appelle communément "dry mouthfeel" particulièrement mal acceptés par certains consommateurs ainsi qu'une texture sableuse lorsque le produit est séché sur des sécheurs à rouleaux, par exemple.

Le brevet US 4259358 décrit un substitut de lait pour jeunes animaux de ferme, bon marché, liquide, dont le profil physico-chimique et nutritionnel devrait se rapprocher de celui du lait maternel. A cet effet, une soupe de graines de légumineuses est hydrolysée par une α-amylase puis par une amyloglycosidase. Non seulement ce traitement hydrolytique produit des sucres simples en abondance qui peuvent bloquer la lysine en réagissant avec elle, en particulier au cours du chauffage (réactions de Maillard), réduisant ainsi la valeur nutritionnelle du lait préparé mais, également, il ne permet pas d'éliminer le goût de haricot indésirable, typique des préparations à base de légumineuses.

Aussi le document FSTA/ IFIS, 96-1-12-g0033 FSTA, 1996, de F.Chome, R.D. Phillips décrit les propriétés physiologiques d'aliments à base de mais et de "cowpea" hydrolysés et produits par cuisson-extrusion en présence d'amylase.
La présente invention se propose de remédier à ces inconvénients, incompatibles avec la nutrition infantile en particulier.

### Résumé de l'invention

La présente invention a pour principal objet un aliment déshydraté complet à base de légumineuses hydrolysées et de céréales, ayant des qualités organoleptiques et nutritionnelles compatibles avec son utilisation pour la nutrition infantile, en particulier.

A cet effet, l'aliment céréalier complet, déshydraté est constitué principalement d'un mélange de légumineuses hydrolysées et de céréales ayant un équivalent dextrose inférieur à 4.

Cet aliment complet a de bonnes propriétés organoleptiques, puisque le goût de "haricot" indésirable, communément appelé "beany flavour" habituellement rencontré avec les préparations à base de légumineuses ou "dry mouthfeel" chez le soja, est éliminé sans affecter la valeur nutritionnelle de l'aliment. De même sa texture est pulpeuse et lisse, qu'il soit séché sur bicylindre ou sur monocylindre. Il a un profil nutritionnel tel qu'il est particulièrement adapté à la nutrition des enfants âgés de 4 à 12 mois, mais également à celle des personnes âgées.

Un autre objet de la présente invention est le procédé de préparation d'un aliment déshydraté complet, à partir d'une base constituée d'un mélange de graines de légumineuses traitées par hydrolyse au moyen d'une carbohydrase et de céréales, ladite hydrolyse étant poursuivie jusqu'à obtention d'un équivalent dextrose (DE) inférieur à 4 pour la base.

Dans un premier mode de réalisation du procédé,
i) on prépare une soupe à base de farine de graines de légumineuses pasteurisée ;
ii) on hydrolyse la soupe pasteurisée jusqu'à obtention du DE souhaité ;
iii) on ajoute à l'hydrolysat obtenu, la farine de céréales, du sucre et de la matière grasse ;
iv) on inactive les enzymes présentes au sein du mélange ainsi obtenu ;
v) puis on sèche le mélange et on le complémente avec des micronutriments de sorte à obtenir un aliment conforme aux normes nutritionnelles.

Dans un second mode de réalisation du procédé selon l'invention,
i) on trempe les graines de légumineuses dans un milieu aqueux acide avant l'hydrolyse ;
ii) on hydrolyse conjointement les céréales et les graines de légumineuses, sous forme d'une soupe de farine préalablement stérilisée contenant le sucre et la matière grasse, jusqu'à obtention du (DE) souhaité ;
iii) on inactive les enzymes présentes au sein du mélange ainsi obtenu ;
iv) puis on sèche le mélange et on le complémente de sorte à obtenir un aliment conforme aux normes nutritionnelles.

Ce procédé permet d'une part d'éliminer le goût de haricot typique indésirable des préparations à base de légumineuses, d'augmenter la densité calorique de l'aliment sans affecter ses qualités nutritionnelles.

### Description détaillée de l'invention

L'aliment selon la présente invention est un aliment céréalier complet, déshydraté, comprenant des carbohydrates et une quantité suffisante de protéines.

L'aliment déshydraté est de préférence sous forme de flocons de 2 à 4 mm de long et de 0,5 à 1 mm d'épaisseur. La teneur en eau de l'aliment peut être comprise entre 2,5 et 3,5% et sa densité est de préférence de 400 g/litres.

On peut utiliser comme principale source de protéines, un hydrolysat d'une ou plusieurs variétés de légumineuses et comme source de carbohydrates des céréales, hydrolysées ou non.

Les légumineuses peuvent être choisies parmi les genres *Phaseolus, Pisum, Lens, Cicer, Vigna, Dolichos*, *Vicia* et *Lipinus* et notamment les différentes espèces de pois (*Pisum sativum*), de haricots (*Phaséolus vulgaris*), de lentilles (*Lens culinaris*), d'arachides (*Arachis hypogaea*) ou la caroube, par exemple.

On utilisera de préférence le niébé ou "cowpea" ou haricot dolique *(Vigna anguiculata*) qui présente de nombreux avantages. D'une part, d'un point de vue organoleptique, il est très bien accepté dans la majorité des pays, y compris par les pays d'Afrique où il fait partie des cultures locales. D'autre part, sur le plan nutritionnel, il a un profil en acides aminés complémentaire de celui des céréales et une teneur en protéines comprise généralement entre 24 et 30% du total. Enfin, il ne présente pas l'inconvénient principal du soja qui est la texture sableuse et demeure économiquement avantageux.
On peut également utiliser une variété de niébé spécialement sélectionnée pour sa haute teneur en protéines (30-35%), par exemple.
Les légumineuses hydrolysées servent de source protéique principale. Elles sont présentes à raison de 30 à 50% en poids de l'aliment céréalier. L'hydrolysat obtenu présente de façon avantageuse un équivalent dextrose (DE) très faible, et en particulier inférieur à 4. Une telle valeur signifie une quantité limitée de sucres réducteurs. De tels sucres réducteurs réagissent avec les acides aminés au cours du chauffage, entraînant en particulier un blocage de la lysine. La perte de qualité nutritionnelle résultante de cet acide aminé indispensable serait incompatible avec les critères nutritionnels requis en particulier pour les aliments infantiles.

L'hydrolyse peut être réalisée par une carbohydrase et de préférence par une α-amylase. Elle est de préférence limitée de sorte à ne pas dépasser un DE de 4.

L'hydrolyse des légumineuses permet également d'augmenter leur capacité calorique ainsi que de réduire leur viscosité trop importante après cuisson.

Les céréales peuvent être choisies parmi le maïs, le riz, le sorgho, l'orge, le blé, le mil, l'avoine et le fonio, par exemple. Elles sont une source principale de carbohydrates. Elles peuvent être utilisées sans hydrolyse préalable. La quantité de céréales utilisées dans l'aliment est comprise entre 25 et 35%, et de préférence 30% par rapport au poids total.

L'aliment céréalier complet selon la présente invention a une bonne qualité nutritionnelle. Sa valeur énergétique minimale peut être de 1700 kJ/ 100 g et il peut contenir un minimum de 3,5 g de lysine réactive /16 gN.
Il peut par exemple contenir de 15 à 18% de protéines, de 9 à 12% de matières grasses, de 1,3 à 1,5 % de linoléate et au plus 5% de fibres diététiques.

L'aliment selon la présente invention peut être aromatisé. L'aromatisation peut être réalisée de manière classique.

Cet aliment complet peut respecter les normes qualitatives et nutritionnelles imposées pour la nutrition spécifique des enfants de 4 à 12 mois, par exemple. De plus, il est bien accepté par le consommateur puisqu'il présente une bonne qualité organoleptique, et en particulier aucun goût de "haricot" grâce à son procédé de préparation.

Pour mettre en oeuvre le procédé de préparation d'un aliment céréalier déshydraté complet, à base d'un mélange de légumineuses hydrolysées et de céréales, on traite des graines de légumineuses par hydrolyse au moyen d'une carbohydrase et de préférence une alpha-amylase "liquéfiante". L'enzyme peut être ajoutée dans des quantités comprises de préférence entre 0,01 et 0,05%. On maintient de préférence pendant l'hydrolyse, une température comprise entre 80 et 90°C, pendant une durée comprise entre 2 et 10 minutes. Avant hydrolyse, les graines de légumineuses sont de préférence décortiquées. Le décorticage peut être réalisé par abrasion, par exemple.
L'hydrolyse peut être réalisée en continu.

On peut traiter par hydrolyse une ou plusieurs variétés de légumineuses en mélange, les légumineuses pouvant être choisies parmi les différentes variétés de pois, de haricots, de lentilles, d'arachides ou de la caroube, par exemple, mais on utilisera de préférence le niébé.

L'hydrolyse des légumineuses et en particulier celle du niébé est difficile mais lorsqu'elle est optimisée, elle permet de diminuer la viscosité et d'augmenter la densité énergétique de la légumineuse.

Le procédé selon la présente invention peut être mis en oeuvre selon deux modes de réalisations distincts.

Pour mettre en oeuvre le premier mode de réalisation du présent procédé, on prépare une soupe à base de farine de graines de légumineuses en y ajoutant de l'eau de manière à obtenir une teneur en matière sèche (Ts) de préférence comprise entre 25 et 35%. On peut partir des graines de légumineuses que l'on décortique le cas échéant puis que l'on réduit en farine.

La soupe est ensuite de préférence pasteurisée, de préférence à 95°C pendant une durée de 5 minutes. L'étape de stérilisation permet de détruire les micro-organismes, mais elle permet également de gélatiniser l'amidon de la légumineuse pour faciliter l'activité de l'amylase.

La soupe pasteurisée est ensuite hydrolysée de façon optimale. On réalise une hydrolyse limitée de la soupe, et ce de manière à obtenir l'équivalent dextrose souhaité, c'est à dire inférieur à 4 et en particulier compris entre 2 et 4.

On ajoute alors les farines de céréales à l'hydrolysat obtenu en mélange humide. Les céréales peuvent être choisies parmi le maïs, le riz, le sorgho, l'orge, le blé, le mil, l'avoine et le fonio, par exemple. Elles sont de préférence utilisées sans hydrolyse préalable, et sous forme de farine. La quantité de céréales utilisée dans l'aliment peut être comprise entre 22 et 32% et de préférence entre 25 et 30%.

On ajoute également du sucre et de la matière grasse. Le sucre est de préférence ajouté au mélange humide à raison de 15 à 25%. La matière grasse est de préférence une huile végétale, que l'on peut ajouter à raison de 9 à 12%, par exemple.

On peut inactiver ensuite les enzymes présentes au sein du mélange ainsi obtenu, par un traitement thermique de 1 à 2 minutes à une température de 140°C à 150°C, par exemple.

Le mélange est alors séché. Le séchage peut se faire sur cylindres à une pression de 8 à 12 bars, par exemple. Le séchage peut être complété de manière à obtenir une teneur en eau finale des flocons proche de 2,5%.

On peut complémenter le produit de manière à ce qu'il satisfasse aux nonnes nutritionnelles définies dans le Codex Alimentarius pour les enfants de 4 à 12 mois, par exemple. Cette complémentation peut consister en un ajout de vitamines et de minéraux.

On peut également aromatiser l'aliment en ajoutant par exemple de la vanilline.

Le présent procédé permet d'éliminer le goût de "haricot" typique des légumineuses et d'obtenir ainsi un aliment complet déshydraté particulièrement bien adapté à la nutrition infantile.

Dans un second mode de réalisation du procédé selon l'invention, les graines de légumineuses ne sont pas directement hydrolysées mais subissent un trempage dans un milieu aqueux acide. Ce trempage a pour effet d'éliminer le goût de haricot.

Les graines de légumineuses sont décortiquées le cas échéant puis trempées dans une solution acide dont le pH est de préférence compris entre 2 et 4, pendant une durée qui peut être comprise entre 4 et 6 heures. Les grains trempés peuvent être rincés puis ensuite être blanchis à la vapeur pendant environ 6 minutes, puis ils sont moulus en "humide" de préférence au moyen d'un moulin colloïdal. Ils peuvent être ensuite réhydratés sous forme d'une soupe de 25 à 35% de matière sèche. Cette soupe ne présente plus le goût de haricot.

A cette soupe, on peut ajouter 22 à 32% de céréales, 18 à 20% de sucre et 8 à 12% de matière grasse. Le mélange est sous forme d'une soupe à laquelle on fait subir l'hydrolyse dans les conditions décrites précédemment. Puis le mélange subit les étapes iii) et iv) décrites précédemment. On obtient un aliment complet déshydraté qui a des propriétés organoleptiques et nutritionnelles telles qu'il peut être utilisé pour la nutrition infantile ou celle de personnes âgées, par exemple.

Les exemples non limitatifs suivants servent à illustrer la présente invention. Les pourcentages sont donnés en poids sauf indication contraire.

### Exemple 1

Pour préparer 100 kg de l'aliment complet déshydraté, on prépare une soupe contenant 46 kg de farine de graines de niébé contenant 28% de protéines, préalablement décortiquées par abrasion, de manière à obtenir une teneur en matière sèche (Ts) comprise entre 25 et 35%. La soupe est ensuite pasteurisée à 95°C pendant 5 minutes.

On réalise alors une hydrolyse limitée de la soupe à 80°C pendant 2 à 10 minutes en ajoutant 24 g d'alpha-amylase, et ce de manière à obtenir un équivalent dextrose compris entre 2 et 4.

On ajoute alors 22 kg de farine de blé à l'hydrolysat obtenu en mélange humide. Puis on ajoute 20 kg de sucre, 8 kg d'huile de palme et 850 g de carbonate de calcium et 250 g de phosphate disodique comme anti-oxydant.

On inactive les enzymes par un traitement thermique de 2 minutes à une température de 140°C. On sèche alors le mélange sur cylindres à une pression de 8 à 12 bars de manière à obtenir une teneur en eau finale des flocons proche de 2,5%.

On complémente le produit en ajoutant 400 g de pyrophosphate de fer et 150 g de complexe minéralo vitaminique adapté aux besoins infantiles.

Le présent procédé permet d'éliminer le goût de "haricot" typique des légumineuses et d'obtenir ainsi un aliment complet déshydraté particulièrement bien adapté à la nutrition infantile.

### Exemple 2

Pour préparer 100 kg de l'aliment complet déshydraté, on décortique par abrasion les graines d'une variété de niébé contenant 28% de protéines, puis on les trempe dans une solution acide à pH 3, pendant une durée de 4 à 6 heures. Les graines trempées sont blanchies à la vapeur pendant environ 6 minutes, puis sont moulues dans un moulin colloïdal de manière à obtenir 39,8 kg de pâte de niébé. On prépare alors une soupe contenant le niébé, dont la teneur en matière sèche est comprise entre 25 à 35%. Puis on ajoute 25,2 kg de farine de maïs, 20 kg de sucre et 8 kg d'huile de palme et 850 g de carbonate de calcium et 250 g de phosphate disodique comme anti-oxydant. On pasteurise le mélange à 95°C pendant 5 minutes.

On réalise une hydrolyse limitée du mélange à 80°C pendant 2 à 10 minutes en ajoutant 24 g d'alpha-amylase, et ce de manière à obtenir un équivalent dextrose compris entre 2 et 4.

On inactive les enzymes par un traitement thermique de 2 minutes à une température de 140°C. On sèche ensuite le mélange sur cylindres à une pression comprise entre 8 et 12 bars. Le séchage peut être complété de manière à obtenir une teneur en eau finale des flocons proche de 2,5%.

On complémente le produit en un ajoutant sous forme de mélange à sec 7,4 kg de lait écrémé en poudre, 400 g de pyrophosphate de fer et 150 g de complexe minéralo vitaminique adapté. On aromatise l'aliment en ajoutant 24 g de vanilline.

On obtient un aliment complet déshydraté qui a des propriétés organoleptiques et nutritionnelles telles qu'il peut être utilisé pour la nutrition infantile ou celle de personnes âgées, par exemple.

## Revendications

1. Aliment céréalier complet, déshydraté, à base d'un mélange de légumineuses hydrolysées et de céréales, ledit aliment ayant un équivalent dextrose (DE) inférieur à 4 et dans lequel la quantité de légumineuse hydrolysée est comprise entre 30 et 50 % et la quantité de céréales est comprise entre 25 et 35% en poids du total.

2. Aliment complet selon la revendication 1, fournissant un apport énergétique minimal de 1700kJ/100g.

3. Aliment complet selon les revendications 1 et 2, contenant au moins environ 3,5g de lysine réactive /16gN.

4. Aliment complet selon l'une des revendications 1 à 3, dans lequel l'équivalent dextrose est compris entre 2 et 4.

5. Aliment selon l'une des revendications 1 à 4, **caractérisé en ce que** les légumineuses sont choisies parmi les genres *Phaseolus, Pisum, Lens, Cicer, Vigna, Dolichos, Vicia* et *Lipinus* et notamment parmi les espèces de pois *Pisum sativum,* de haricots *Phaseolus vulgaris,* de lentilles *Lens culinaris,* d'arachides *Arachis hypogaea* ou la caroube.

6. Aliment selon l'une des revendications 1 à 5, dans lequel la légumineuse est une variété de niébé sélectionnée pour sa teneur en protéine comprise entre 30 et 35 % en poids.

7. Aliment selon l'une des revendications 1 à 6, dans lequel les céréales sont choisies parmi le maïs, le riz, le blé, le mil, le sorgho, l'orge, l'avoine, et le fonio.

8. Procédé de préparation d'un aliment déshydraté complet selon la revendication 1, à base d'un mélange de graines de légumineuses traitées par hydrolyse au moyen d'une carbohydrase et de céréales, ladite l'hydrolyse étant poursuivie jusqu'à obtention d'un équivalent dextrose (DE) inférieur à 4, dans lequel :
i) on prépare une soupe à base de farine de graines de légumineuses pasteurisée ;
ii) on hydrolyse la soupe pasteurisée jusqu'à obtention du DE souhaité ;
iii) on ajoute à l'hydrolysat obtenu la farine de céréales, du sucre et de la matière grasse ;
iv) on inactive les enzymes présentes au sein du mélange ainsi obtenu ;
v) puis on sèche le mélange et complète avec des micronutriments de sorte à obtenir un aliment conforme aux normes nutritionnelles souhaitées.

9. Procédé de préparation d'un aliment déshydraté complet selon la revendication 1 à base d'un mélange de graines de légumineuses traitées par hydrolyse au moyen d'une carbohydrase et de céréales, ladite l'hydrolyse étant poursuivie jusqu'à obtention d'un équivalent dextrose (DE) inférieur à 4, dans lequel :
i) on trempe les graines de légumineuses dans un milieu aqueux acide avant l'hydrolyse ;
ii) on hydrolyse conjointement les céréales et les graines de légumineuses, sous forme d'une soupe de farine préalablement stérilisée contenant le sucre et la matière grasse, jusqu'à obtention du DE souhaité ;
iii) on inactive les enzymes présentes au sein du mélange ainsi obtenu ;
iv) puis on sèche le mélange et on le complémente de sorte à obtenir un aliment conforme aux normes nutritionnelles souhaitées.

10. Procédé selon les revendications 8 et 9, dans lequel la carbohydrase est une alpha-amylase, utilisée à raison de 0,01 à 0,05% en poids.

## Patentansprüche

1. Dehydratisiertes Getreide-Vollwertnahrungsmittel auf der Basis einer Mischung von hydratisierten Leguminosen und Cerealien mit einem Dextroseäquivalent (DE) unter 4, bei dem die hydrolysierte Leguminosenmenge 30 bis 50% beträgt und die Cerealienmenge 25 bis 35% vom Gesamtgewicht beträgt.

2. Vollwertnahrungsmittel nach Anspruch 1, das eine Mindestenergiezufuhr von 1700 kJ/100g liefert.

3. Vollwertnahrungsmittel nach den Ansprüchen 1 und 2, das mindestens etwa 3,5g reaktives Lysin/16gN enthält.

4. Vollwertnahrungsmittel nach einem der Ansprüche 1 bis 3, bei dem das Dextroseäquivalent 2 bis 4 beträgt.

5. Nahrungsmittel nach einem der Ansprüche 1 bis 4, **dadurch gekennzeichnet, daß** die Leguminosen aus den Gattungen *Phaseolus, Pisum, Lens, Cicer, Vigna, Dolichos, Vicia* und *Lipinus* und insbesondere aus den Arten Erbsen *Pisum sativum,* Bohnen *Phaseolus vulgaris,* Linsen *Lens culinaris,* Erdnüssen *Arachis hypogaea* oder Johannisbrot ausgewählt sind.

6. Nahrungsmittel nach einem der Ansprüche 1 bis 5, bei dem die Leguminose eine Niebe-Kuhbohnensorte ist, die wegen ihres Proteingehalts zwischen 30 und 35 Gew.-% ausgewählt wird.

7. Nahrungsmittel nach einem der Ansprüche bis 6, bei dem die Cerealien aus Mais, Reis, Weizen, Hirse, Sorghum, Gerste, Hafer und Fonio ausgewählt sind.

8. Verfahren zur Herstellung eines dehydratisierten Vollwertnahrungsmittels nach Anspruch 1 auf der Basis einer Mischung aus Leguminosenkernen, die durch Hydrolyse mit Hilfe einer Carbohydrase behandelt werden, und Cerealien, wobei die Hydrolyse bis zum Erhalten eines Dextroseäquivalents (DE) unter 4 weitergeführt wird, bei dem
i) man eine pasteurisierte Suppe auf der Grundlage von Mehl von Leguminosenkernen herstellt,
ii) man die pasteurisierte Suppe hydrolysiert, bis das gewünschte DE erhalten wird,
iii) man dem erhaltenen Hydrolysat Cerealienmehl, Zucker und Fett zusetzt,
iv) man die Enzyme, die in der auf diese Weise erhaltenen Mischung vorhanden sind, inaktiviert,
v) und dann die Mischung trocknet und mit Mikronährstoffen so ergänzt, daß man ein den gewünschten Nahrungsnormen entsprechendes Nahrungsmittel erhält.

9. Verfahren zur Herstellung eines dehydratisierten Vollwertnahrungsmittels nach Anspruch 1 auf der Basis einer Mischung aus Leguminosenkernen, die durch Hydrolyse mit Hilfe einer Carbohydrase behandelt werden, und Cerealien, wobei die Hydrolyse bis zum Erhalten eines Dextroseäquvalents (DE) unter 4 weitergeführt wird, bei dem
i) man die Leguminosenkerne vor der Hydrolyse in ein saures wässriges Medium eintaucht,
ii) man die Cerealien und die Leguminosenkerne gemeinsam in Form einer zuvor keimfrei gemachten Mehlsuppe, die den Zucker und das Fett enthält, hydrolysiert, bis man das gewünschte DE erhält,
iii) man die Enzyme, die in der auf diese Weise erhaltenen Mischung vorhanden sind, inaktiviert,
iv) und dann die Mischung trocknet und sie so ergänzt, daß man ein den gewünschten Nahrungsnormen entsprechendes Nahrungsmittel erhält.

10. Verfahren nach den Ansprüchen 8 und 9, bei dem die Carbohydrase eine alpha-Amylase ist, die in einem Anteil von 0,01 bis 0,05 Gew.-% verwendet wird.

## Claims

1. Dehydrated complete cereal food based on a mixture of hydrolysed legumes and cereals, the said food having a dextrose equivalent (DE) below 4 and in which the quantity of hydrolysed legumes lies between 30 and 50 % and the quantity of cereals lies between 25 and 35 weight % of the total.

2. Complete food according to claim 1, providing a minimum energy input of 1700kJ/100g.

3. Complete food according to claims 1 and 2, containing at least approximately 3.5 g of reactive lysine/16gN.

4. Complete food according to one of claims 1 to 3, wherein the dextrose equivalent lies between 2 and 4.

5. Food according to one of claims 1 to 4, **characterised in that** the legumes are chosen from the genuses *Phaseolus, Pisum, Lens, Cicer, Vigna, Dolichos, Vicia* and *Lipinus* and in particular from the species of pea *Pisum sativum,* of bean *Phaseolus vulgaricus,* of lentils *Lens culinaris,* and of groundnuts *Arachis hypogaea* or carob.

6. Food according to one of claims 1 to 5, wherein the legume is a variety of cowpea selected for its protein content of between 30 and 35 weight %.

7. Food according to one of claims 1 to 6, wherein the cereals are chosen from maize, rice, wheat, millet, sorghum, barley, oats and fonio.

8. Method for preparing a complete dehydrated food according to claim 1 based on a mixture of leguminous seeds treated by hydrolysis by means of a carbohydrase and cereals, the said hydrolysis being pursued until a dextrose equivalent (DE) is obtained below 4, wherein:
i) a pasteurised soup is prepared based on the flour of leguminous seeds;
ii) the pasteurised soup is hydrolysed until the desired DE is obtained;
iii) cereal flour, sugar and fats are added to the hydrolysate obtained;
iv) the enzymes present within the mixture obtained in this way are inactivated;
v) the mixture is dried and micronutrients are added so as to obtain a food conforming to the desired nutritional standards.

9. Method for preparing a complete dehydrated food according to claim 1, based on a mixture of leguminous seeds treated by hydrolysis by means of a carbohydrase and cereals, the said hydrolysis being pursued until a dextrose equivalent (DE) is obtained below 4, wherein:
i) leguminous seeds are soaked in an acidic aqueous medium before hydrolysis;
ii) the cereals and leguminous seeds are hydrolysed together in the form of a previously sterilised flour soup containing sugar and fats, until the desired DE is obtained;
iii) the enzymes present within the mixture obtained in this way are inactivated;
iv) the mixture is then dried and additions are made so as to obtain a food conforming to the desired nutritional standards.

10. Method according to claims 8 and 9, wherein the carbohydrase is an alpha-amylase, used in an amount of 0.01 to 0.05 weight %.
